# EUROPEAN PATENT APPLICATION

(11) **EP 2 789 238 A1**
(43) Date of publication of application: **15.10.2014**
(21) Application number: 12855535.6
(22) Date of filing: 05.12.2012
(51) Int. Cl.: A01N 65/42, A01N 43/16, A01N 27/00, A01P 1/00, C09D 5/14

(54) **MICROBICIDAL COMPOSITION AND METHOD FOR PREPARING THE SAME**

(30) Priority: 07.12.2011 BR PI1105165
(71) Applicant: Ipel Itibanyl Produtos Especiais Ltda., 13240-000 Jarinu - SP (BR)
(72) Inventor: PICCIRILLO PINTO, Walter, Atibaia - SP - CEP 12941-000 (BR); CARITÁ JUNIOR, Giovanny, Atibaia - SP - CEP 12945-530 (BR); DA SILVA, Heloisa Fernanda, Atibaia - SP CEP 12943-430 (BR)
(74) Representative: Stöckeler, Ferdinand
(86) International application number: PCT/BR2012/000498
(87) International publication number: WO 2013/082687

(57) **Abstract**

This invention patent discloses a synergistic microbicidal composition containing essential oils, terpene derivatives and bioflavonoids, which composition can be used in various industrial processes at a reduced cost and in simplified steps.

## Description

### FIELD OF THE INVENTION

This invention patent relates to a synergic microbicidal compound, comprising essential oils, terpene derivatives, and bioflavonoids, applicable to diverse industrial processes, presenting reduced costs and streamlined steps.

### BACKGROUND OF THE INVENTION

In industrial processes, the control of microbial growth is essential to get products in agreement with health legislation or quality parameters. Some examples of the mentioned processes include the production of paints, resins, slurries, cosmetics, household cleaning products, glues, adhesives, cutting oils and lubricants, paper and cellulose production, sugar and alcohol production processes, textile products, plastics and fuels. In general, water-based products are likely to microbial proliferation.

A manner to eliminate or control microbial growth is using microbicidal compounds or preservatives, in order to ensure the integrity and quality of the finished product. Disordered growth of bacteria, yeasts, fungi and algae results in the alteration of physicochemical parameters of finished products. Some contamination effects include alterations of color, smell, pH, viscosity, separation of phases, and formation of gases, factors that cause the loss of batches.

### DESCRIPTION OF STATE OF THE ART

In certain cases, the use of microbicidals does not guarantee an effective control of microbial population, because of the microorganism resistance, or the aggressive conditions of the medium. In the state of the art, formulation containing derivatives of isothiazolinone, bronopol, semi acetal, formaldehyde donors, and triazines are known. These compounds are usually derived from nitrogenated, halogenated, sulphonated functions, among others. Other formulations further comprise a water basis and COV *(Compostos Orgânicos Voláteis* [VOC | Volatile Organic Compounds]) low content. One of the disadvantages related to method for preparing the formulations previously mentioned is the use of non-renewable raw materials, generating sub products that are toxic and/or aggressive to the environment.

Thus, there is the necessity to find new compositions preferably comprising guaranteed safe and effective raw materials, and a production process with reduced costs, related to the concept of sustainable development.

### OBJECTIVE OF THE INVENTION

The present invention patent application aims to overcome the disadvantages found in the state of art, disclosing a microbicidal composition, comprising essential oils, terpene derivatives, bioflavonoids compounds and keratin and extraction process thereof.

### DETAILED DESCRIPTION OF THE INVENTION

In a round-bottom flask, containing a water-based solvent and under magnetic stir, it is added an anionic surfactant. After homogenization it is added at least two active ingredients selected from the group comprising rosemary oil *(Rosemarinus officinalis),* eucalyptus oil *(Eucaliptus sp),* basil oil *(Ocimun basilicum),* Indian clove oil (*Eugenia caryophyllata*), tea tree oil extract, propolis extract, *Aloe vera* extract *(Aloe arboronesis*), Neen oil *(Azadirachta indica*), terpenes, and bioflavonoids. After this step, it is set the final volume with solvent, under homogenization, at room temperature.

Regarding efficiency, the methodology of the assays is based on North American standard ASTM D2574-97 "Resistance of emulsion paints in the container to the attack of microorganisms".

50.0g of samples have been collected and inoculated with 10⁶ UFC/g, incubated at 36°C.

Used test-microorganisms comprise *Pseudomonas aeruginosa, E. aerogenes, S. aureus, Saccharomyces cerevisae, Candida albicans,* and *Rhodotorula rubra.* It has been counted the surviving microorganisms under direct plating on TSA and Saburaud Dextrose on days 0, 1, 2, 7, 14, 21 and 28, with re-inoculation on 7^{th} and 14^{th} day. Assay conditions are summarized in the following table (Table 1).

**Table 1 - Methodology used in efficiency assays.**

| | |
|---|---|
| Basic methodology: | ASTM D 2574 - Standard Test Method for Resistance of emulsions paints in the container to attack by microorganisms |
| Initial microbial load in the sample: | 10⁶ UFC/g or mL |
| Test conditions: | 50g of sample, inoculated with the suspension of test-microorganism and incubated at 36±1°C |
| Test-microorganisms: | Pool 1: *Pseudomonas aeruginosa, Staphylococcus aureus and Enterobacter aerogenes* |
| Recovery methodology: | Pool 2: *Saccharomyces cerevisae, Candida albicans, Rodothorula rubra* Direct plating on TSA (bacteria) and Saboraud Dextrose Agar (yeasts) |
| Analysis of surviving compounds after: | 0, 1, 2, 7, 14, 21 and 28 days. |
| Re-inoculations | 7^{th} and 14^{th} day |

According to tables 2 and 3, it was noted that compositions presented a synergic microbicidal action, and with wide spectrum, common to gram-positive and gram-negative bacteria and fungi.

**Table 2 - Results of Challenge Test to the Styrene Acrylic Emulsion preservation.**

| Microbicidal/concentration | Days (UFC/MI) | | | |
|---|---|---|---|---|
| | 7 | 14 | 21 | 28 |
| 0.20% OLUS 1000 | <10² | <10² | <10² | 5.5x10² |
| 0.20% OLUS 2000 | <10² | <10² | <10² | 7.5x10² |
| 0.20% OLUS 3000 | <10² | <10² | <10² | 8.0x10² |
| 0.15% IPEL 5072 | <10² | <10² | <10² | 9.0x10² |
| 0.20% IPEL 5072 | <10² | <10² | 1.3x10² | 9.5x10² |
| 0.15% IPEL BP-507 | <10² | <10² | 6.3x10³ | 1.1x10² |
| 0.15% IPEL BP-509 | <10² | <10² | 1.2x10³ | 1.8x10² |
| Without microbicidal | 3.0x10² | 6.3x10³ | 4.6x10⁴ | 2.8x10² |

**Table 3 - Results of Challenge Test to the Semi-Gloss Acrylic Paint preservation.**

| Microbicidal / concentration | DAYS (UFC/mL | | | |
|---|---|---|---|---|
| | 7 | 14 | 21 | 28 |
| 0.20% OLUS 1000 | <10² | <10² | <10² | 1.3x10³ |
| 0.20% OLUS 2000 | <10² | <10² | <10² | 8.5x10² |
| 0.20% OLUS 3000 | <10² | <10² | <10² | <10² |
| 0.20% IPEL 5072 | <10² | <10² | <10² | <10² |
| 0.15% IPEL BP-507 | <10² | <10² | <10² | <10² |
| 0.20% IPEL BP-509 | <10² | <10² | <10² | 1.1x10² |
| Without microbicidal | 1.0x10³ | 2.0x10³ | 3.2x10⁴ | 1.4x10⁶ |

| | | | | |
|---|---|---|---|---|
| Legend: IPEL OLUS 1000 - 100% natural bactericide formulation of Bioflavonoids and 1 essential oil. IPEL OLUS 2000 - 100% natural bactericide formulation of Terpene Derivatives and 1 essential oil. IPEL OLUS 3000 - 100% natural bactericide formulation of Terpene Derivatives and Bioflavonoids. IPEL 5072 - Hybrid bactericide formulation of Terpene Derivatives and Isothiazolinones. IPEL BP-507 - Synthetic bactericide formulation based on isothiazolinone derivatives and semi acetals widely used in the market to preserve water-based paints and coatings. IPEL BP-509 - Synthetic bactericide formulation based on isothiazolinone derivatives and halogenated derivatives free of VOCs widely used in the market to preserve water-based formulation. | | | | |

Terpene derivatives comprise sesquiterpenes, monoterpenes and other polyterpenes, exclusively acquired from TERPENOIL TECNOLOGIA ORGANICA LTDA Company.

The preservative compositions obtained can be used to preserve water-based paints, styrene acrylic emulsions and latex, mineral filler dispersion (slurries), textures and other coatings against microorganism attack. Other applications comprise the use of the composition in cosmetic and personal care products, such as shampoos, gels, and lotions.

Following there are some examples, the present invention is not restricted to them, and there are other variations within the scope.

### Example 1 - Preparation of formulation to preserve paints, emulsions and others.

In a glass flask equipped with a stir system and a nozzle for addition, it is added 25 to 45 parts of ethanol or isopropanol. Next, under stir it is added 15 to 25 parts of an anionic surfactant, such as ammonium lauryl sulfate, sodium lauryl sulfate, or sodium dodecyl sulfate.

Then, it is added 30 to 55 parts of terpene derivative and 15 to 30 parts of Neen oil.

The volume is completed with 15 to 30 parts of ethoxylated/propoxylated fatty alcohol.

System is kept under stir (80 - 200 RPM) between 15 and 35 minutes at room temperature to complete homogenization.

### Example 2 - Preparation of formulation to preserve household cleaning products and cosmetics.

In a glass flask equipped with a stir system and a nozzle, it is added 5 to 25 parts of ethanol or isopropanol or propylene glycol. Under magnetic stir, it is added 35 to 55 parts of distilled water. Next, it is added 5 to 30 parts of anionic surfactant. Then, it is added 25 to 40 parts of terpene derivative or of bioflavonoid derivative.

It is added 30 to 40 parts of *Aloe vera* extract.

System is kept under stir (80 - 200 RPM) between 15 and 35 minutes at room temperature to complete homogenization.

### Example 3 - Preparation of "hybrid" disinfectant formulation with natural basis.

In a glass flask equipped with a stir system and a nozzle for addition, it is added 5 to 25 parts of ethanol or isopropanol or propylene glycol. Under stir, it is added 5 to 30 parts of anionic surfactant.

Then, it is added 40 to 60 parts of Terpene Derivative or Bioflavonoid. Following, it is added 10 to 20 parts of alkyl dimethyl benzyl ammonium chloride with chains ranging from C₁₂ to C₁₆.

Next, the volume is completed with 10 to 20 parts of distilled water. System is kept under stir (80 - 200 RPM) between 10 and 20 minutes at room temperature to complete homogenization.

## Claims

1. "MICROBICIDAL COMPOSITION AND METHOD FOR PREPARING THE SAME", wherein it comprises a synergic mixture of at least two active substances, selected from the group consisting of Neem oil, terpene derivatives, bioflavonoids compounds, and *Aloe vera* extract; a water-based solvent, selected from the group consisting of distilled water, ethanol, polypropylene glycol, isopropanol, or mixtures thereof; an anionic surfactant selected from the group consisting of ammonium lauryl sulfate, sodium, lauryl sulfate and sodium dodecyl sulfate.

2. "MICROBICIDAL COMPOSITION" according to claim 1, wherein it comprises a mixture of **two** or more active substances in the proportion of 30% to 55%, a water-based solvent in the proportion of 5% to 40%, and an anionic surfactant in the proportion of 5% to 25%, and optionally the addition of alkyl dimethyl benzyl ammonium chloride, in the proportion of 10% to 20%, with chains ranging from C₁₂ to C₁₆.

3. "METHOD", wherein it comprises the steps of:
a) Addition of solvent in a glass flask;
b) Homogenization;
c) Addition of anionic surfactant;
d) Homogenization;
e) Addition of at least two active substances;
f) Homogenization;

4. "METHOD" according to claim 3, wherein the homogenization steps "b", "d", and "e" occurs at room temperature during 15 to 25 minutes.

5. "METHOD" according to claim 3, wherein in the step of addition the active substances are selected from the group consisting of Neem oil, bioflavonoids compounds, *Aloe vera* extract; a water-based solvent, selected from the group consisting of distilled water, ethanol, polypropylene glycol, isopropanol, or mixture thereof; an anionic surfactant selected from the group consisting of ammonium lauryl sulfate, sodium lauryl sulfate and sodium dodecyl sulfate.
